# EUROPEAN PATENT SPECIFICATION

(11) **EP 1 455 113 B1**
(45) Date of publication and mention of the grant of the patent: **08.11.2006**
(21) Application number: 04100872.3
(22) Date of filing: 04.03.2004
(51) Int. Cl.: F16G 1/28

(54) **Toothed belt**
Zahnriemen
Courroie à dents

(30) Priority: 04.03.2003 IT TO20030158
(43) Date of publication of application: 08.09.2004
(73) Proprietor: Dayco Europe S.r.l. con Unico Socio, 66013 Chieti (IT)
(72) Inventor: Di Meco, Marco, 65129 Pescara (IT); Delli Rocioli, Massimiliano, 65016 Montesilvano (IT); Di Giacomo, Tommaso, 66010 S. Martino Sulla Marrucina (IT)
(74) Representative: Jorio, Paolo

(56) References cited:
- EP-A- 0 965 771
- DE-A- 3 535 676
- DE-A- 10 029 470
- DE-B- 1 253 907
- US-A- 3 643 518
- PATENT ABSTRACTS OF JAPAN vol. 017, no. 374 (M-1445), 14 July 1993 (1993-07-14) & JP 05 060179 A (UNITTA CO LTD), 9 March 1993 (1993-03-09)

## Description

The present invention relates to a toothed belt and to a method of fabrication of a toothed belt.

It is known (from DE-A-10029470) the use of a toothed belt comprising a body made of elastomeric material, in which is embedded a plurality of longitudinal filiform resistant inserts or cords. The toothed belt is provided with a pair of surfaces, from one of which there extends integrally a toothing formed by a plurality of teeth or cogs which extend in a direction transverse to the belt itself.

Belts of the type described briefly above are used in power-transmission systems, in which it is necessary to ensure timing between a drive member and a driven member. A typical example of such systems is represented by the timing control in the engines of motor vehicles, to which reference will be made in what follows, without this implying any loss of generality.

In general, timing control systems comprise a drive pulley, which is rigidly fixed to the engine shaft, at least one driven pulley, which is rigidly fixed to the camshaft, and a tensioner of a fixed or automatic type for tensioning of the toothed belt.

In order to ensure proper axial positioning of the belt with respect to the pulleys and to the tensioner, one of the pulleys or the tensioner may be provided with a pair of annular containment flanges, which extend at the axial ends of the pulley or of the tensioner so as to delimit a U-shaped seat or channel for the belt.

In use, the toothed belt generally meshes with the pulleys by means of the toothed part and co-operates, with its own back, with the outer surface of the tensioner or of the idlers.

The surface of the belt is not perfectly plane when it is wound on the back on account of the processes of grinding to which the surface itself is subjected. The said lack of uniformity, which is due to winding of the belt on any smooth surface, causes a high degree of noise similar to the noise of meshing of the belt on the pulley.

The purpose of the present invention is to obtain a toothed belt that does not present the drawbacks described above and, in particular, a toothed belt having a low overall level of noise caused by the interaction of the back of the belt with the tensioner, and an increased average life.

According to the present invention, there is provided a toothed belt made according to the specifications of Claim 1.

According to the present invention, there is moreover provided a method of fabrication of a toothed belt, according to the specifications of Claim 18.

For a better understanding of the present invention, it will now be further described also with reference to the attached figures, in which:
- Figure 1 is a partial perspective view of a toothed belt according to the present invention; and
- Figure 2 is an enlarged view of a thread of weft of the fabric for coating a toothed belt made according to a preferred embodiment of the present invention.

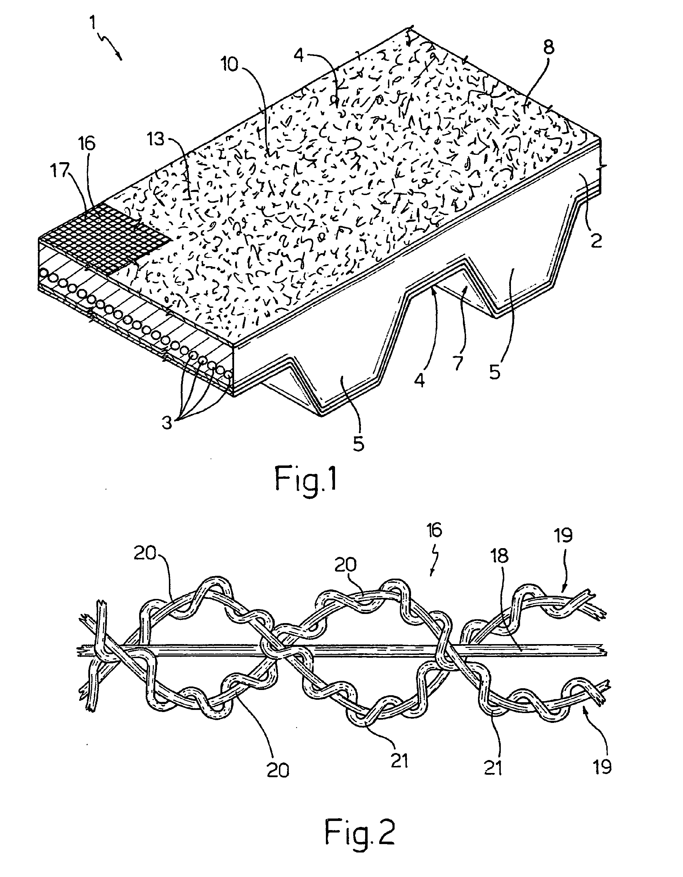

In Figure 1, the reference number 1 designates, as a whole, a toothed belt comprising a body 2 made of elastomeric material, for example, CR or HNBR, in which a plurality of longitudinal filiform resistant inserts or cords 3 is embedded.

The toothed belt 1 is provided with a face 4, from which there extends integrally a toothing made up of a plurality of teeth or cogs 5, and preferably coated with a fabric 7.

The other of said faces, opposite to the first one, referred to in what follows as the back 8 of the belt, is also coated with a fabric 10.

According to a preferred embodiment, the fabric 10 has threads of weft 16, which extend in the longitudinal direction of the belt 1, and threads of warp 17, which extend in the transverse direction of the belt 1.

With reference in particular to Figure 2, the threads of weft 16 consist of an elastic thread 18 as core and a pair of composite threads 19 wound on the elastic thread, each composite thread 19 comprising a thread 20 with high thermal and mechanical resistance, and a coating thread 21, wound on the thread with high thermal and mechanical resistance.

The weft thread 16 may optionally comprise an elastic thread 18 as core and a pair of composite threads 19 wound around the elastic thread 18, each comprising a thread 20 with high thermal and mechanical resistance, and a pair of coating threads 21 wound around the thread 20 with high thermal and mechanical resistance. With this structure of the fabric, the pair of composite threads 19 is wound around the elastic thread 18 so as to coat its surface entirely.

The elastic thread 18 is preferably made of polyurethane.

The thread 20 with high thermal and mechanical resistance is preferably made of polyamide, more preferably still it is made of para-aromatic polyamide, in order to ensure that the entire fabric 10 will have a high thermal and mechanical resistance and, at the same time, in order to isolate it from the external surface.

The coating thread 21, which is provided with higher resistance to abrasion, must have more bulk than the thread 20 with high thermal and mechanical resistance so as to coat it entirely, and it is therefore preferably made of textured polymeric material, is more preferably made of polyamide, and even more preferably made of nylon fibres 66. Alternatively, the coating thread 21 has a hybrid composition, in this case preferably comprising nylon and Teflon. The coating thread 21 may be single or multiple; in the case where it is double, one thread is wound in one direction and the other wound in the opposite direction on the thread 20 with high thermal and mechanical resistance.

The warp 17 must have different characteristics from the weft 16 described previously. In fact, it is not necessary for it to be elastic, whereas it must have high mechanical resistance. Consequently, it is preferably made of polyamide, for example nylon, and more preferably still it is made of a meta-aromatic polyamide.

According to a further preferred embodiment, the fabric 10 for coating the back 8 of the belt 1 and the fabric 7 for coating the toothing 5 are the same.

The fabric 10 is preferably partially embedded in the elastomeric composition forming the body 2 of the belt 1 and is made up of a plurality of fibres 11, which are at least partially interrupted on at least part of the surface 13 of the back 8 itself. The fibres 11 exit at least partially from the surface 13 of the back 8 of the belt 1 and define tufts 12, which impart on the surface 13 of the back 8 of the toothed belt 1 a tufted appearance, for instance similar to velvet or satin, or to a mat or to a plush material.

It has been surprisingly discovered that, even when the fibres are partially broken, contrary to expectations, the resistance of the fabric 7 itself is not diminished and, at the same time, in use, thanks to the fabric 7, the noise due to the belt 1 is reduced.

The method for fabricating the toothed belt 1 is similar to known processes, but comprises a further step for fabrication of the belt itself. The said further processing step consists of a treatment of partial abrasion of the fabric 7, which may, for instance, be carried out by adopting a customary treatment of grinding of the back 8 of the belt 1.

Treatments of grinding of a surface of a belt have the purpose of rendering the surface of the belt uniform and are normally carried out by abrasion of part of the surface of the belt, for instance by means of a cylinder on which glass paper is wrapped.

In order to subject the back 8 coated with the fabric 7 of the toothed belt 1 to grinding, an entire sleeve, from which the individual belts are subsequently cut, is set on a pair of non-toothed cylinders so that the back of the sleeve will come into contact with a cylinder provided with an abrasive surface. The said cylinder is able to rotate and oscillate so as to abrade the coating fabric partially, by breaking up the fibres constituting it in order to form tufts until the final appearance of the back of the belt assumes the aforesaid tufted, or velvety, or satin-like appearance.

From examination of the characteristics of the toothed belt 1 made according to the present invention, the advantages that the said belt makes available are evident.

In use, the toothed belt 1 has a low noise level and, at the same time, a high resistance to wear and hence a long life.

Finally, it is clear that modifications may be made to the toothed belt 1 described herein, without thereby departing from the sphere of protection of the present invention.

For example, the materials making up the coating fabric or fabrics and the parameters of the treatment of abrasion of the fabric that coats the back of the belt in order to obtain a more or less velvety effect may be varied.

## Claims

1. A toothed belt (1) comprising: a body (2) made of elastomeric material, said body being provided with a face, from which there extends integrally a toothing (4) made up of a plurality of teeth (5); and a back (8), opposite to said face, said back (8) being provided with a fabric (10), which comprises a multitude of fibres (11) and is adherent to the surface (13) of said back, said toothed belt (1) being **characterized in that** said back (8) has a tufted surface.

2. The toothed belt according to Claim 1, **characterized in that** said tufted surface is an exposed surface of said fabric, having tufts defined by said fibres of said fabric.

3. The toothed belt according to Claim 2, **characterized in that** said fibres exit partially from said surface of said back.

4. The toothed belt according to Claim 3, **characterized in that** said fibres are partially interrupted on at least part of said surface.

5. The toothed belt according to Claim 4, **characterized in that** said fibres of said fabric are partially abraded.

6. The toothed belt according to Claim 5, **characterized in that** said fibres of said fabric are ground.

7. The toothed belt according to any one of the foregoing claims, **characterized in that** said fabric (10) is made up a weft (16) and a warp (17), said weft (16) being made up of a thread of weft formed by an elastic thread (18) as core and at least one pair of composite threads (19) wound on said elastic thread (18), each composite thread (19) comprising a thread (20) with high thermal and mechanical resistance, and at least one coating thread (21) wound on said thread (20) with high thermal and mechanical resistance.

8. The toothed belt according to Claim 7, **characterized in that** each of said composite threads (19) comprises a thread (20) with high thermal and mechanical resistance and a pair of coating threads (21) wound on said thread (20) with high thermal and mechanical resistance.

9. The toothed belt according to Claim 5 or Claim 6, **characterized in that** said first elastic thread (18) is made of polyurethane.

10. The toothed belt according to any one of Claims 5 to 7, **characterized in that** said thread (20) with high thermal and mechanical resistance is made of para-aromatic polyamide.

11. The toothed belt according to any one of Claims 5 to 8, **characterized in that** each of said coating threads (21) is made of textured polymeric material.

12. The toothed belt according to any one of Claims 5 to 9, **characterized in that** each of said coating threads (21) is made of polyamide.

13. The toothed belt according to Claim 10, **characterized in that** said coating thread (21) is made of nylon 66.

14. The toothed belt according to either Claim 1 or Claim 2, **characterized in that** said warp (17) is made up of polyamide threads.

15. The toothed belt according to either Claim 1 or Claim 2, **characterized in that** said warp (17) is made up of meta-aromatic polyamide threads.

16. The toothed belt according to any one of the foregoing claims, **characterized in that** it comprises a coating fabric (7) that is adherent to the teeth (5) opposite to said face, said back (8) being provided with a fabric (10), which comprises a multitude of fibres (11) and is adherent to the surface (13) of said back, said method being **characterized in that** it comprises the step of treating said surface so as to render said surface at least partially tufted.

17. The toothed belt according to any one of the foregoing claims, **characterized in that** said first fabric and said second fabric are made of the same materials.

18. A method for fabricating a toothed belt (1), said toothed belt comprising: a body (2) made of elastomeric material, said body being provided with a face, from which there extends integrally a toothing (4) made up of a plurality of teeth (5); and a back (8),

19. The method according to Claim 18, **characterized in that** said treatment is a treatment of abrasion.

20. The method according to Claim 19, **characterized in that** said treatment is a treatment of grinding.

## Patentansprüche

1. Zahnriemen (1) mit: einem Körper (2) aus Elastomermaterial, wobei der Körper mit einer Fläche versehen ist, von der eine mehrere Zähne (5) aufweisende Verzahnung (4) einstückig absteht; und mit einer der genannten Fläche entgegengesetzten Rückseite (8), die mit einem Gewebe (10) versehen ist, das eine Vielzahl von Fasern (11) aufweist und an der Oberfläche (13) der Rückseite anhaftet, wobei der Zahnriemen (1) **dadurch gekennzeichnet ist, dass** die Rückseite (8) eine büschelige Oberfläche aufweist.

2. Zahnriemen nach Anspruch 1, **dadurch gekennzeichnet, dass** die büschelige Oberfläche eine freiliegende Oberfläche des Gewebes ist, die Büschel aufweist, welche durch die Fasern des Gewebes gebildet sind.

3. Zahnriemen nach Anspruch 2, **dadurch gekennzeichnet, dass** die Fasern teilweise aus der Oberfläche der Rückseite austreten.

4. Zahnriemen nach Anspruch 3, **dadurch gekennzeichnet, dass** die Fasern an mindestens einem Teil der genannten Fläche teilweise unterbrochen sind.

5. Zahnriemen nach Anspruch 4, **dadurch gekennzeichnet, dass** die Fasern des Gewebes teilweise angerauht sind.

6. Zahnriemen nach Anspruch 5, **dadurch gekennzeichnet, dass** die Fasern des Gewebes geschliffen sind.

7. Zahnriemen nach einem der vorhergehenden Ansprüche, **dadurch gekennzeichnet, dass** das Gewebe (10) aus einer Schussfadenstruktur (16) und einer Kettfadenstruktur (17) besteht, wobei die Schussfadenstruktur (16) aus einem Schussfaden hergestellt ist, der durch einen elastischen Faden (18) als Kern und mindestens ein Paar zusammengesetzter Fäden (19) gebildet ist, die auf den elastischen Faden (18) gewickelt sind, wobei jeder zusammengesetzte Faden (19) einen Faden (20) mit hoher Wärmebeständigkeit und mechanischer Beständigkeit und mindestens einen Umhüllungsfaden (21) aufweist, der auf den hohe Wärmebeständigkeit und mechanische Beständigkeit aufweisenden Faden (20) gewickelt ist.

8. Zahnriemen nach Anspruch 7, **dadurch gekennzeichnet, dass** jeder der zusammengesetzten Fäden (19) einen Faden (20) mit hoher Wärmebeständigkeit und mechanischer Beständigkeit und ein Paar von Umhüllungsfäden (21) aufweist, die auf den hohe Wärmebeständigkeit und mechanische Beständigkeit aufweisenden Faden (20) gewickelt sind.

9. Zahnriemen nach Anspruch 5 oder Anspruch 6, **dadurch gekennzeichnet, dass** der erste elastische Faden (18) Polyurethan aufweist.

10. Zahnriemen nach einem der Ansprüche 5 bis 7, **dadurch gekennzeichnet, dass** der Wärmebeständigkeit und mechanische Beständigkeit aufweisende Faden (20) para-aromatisches Polyamid aufweist.

11. Zahnriemen nach einem der Ansprüche 5 bis 8, **dadurch gekennzeichnet, dass** jeder der Umhüllungsfäden (21) texturiertes Polymermaterial aufweist.

12. Zahnriemen nach einem der Ansprüche 5 bis 9, **dadurch gekennzeichnet, dass** jeder der Umhüllungsfäden (21) Polyamid aufweist.

13. Zahnriemen nach Anspruch 10, **dadurch gekennzeichnet, dass** der Umhüllungsfaden (21) Nylon (66) aufweist.

14. Zahnriemen nach Anspruch 1 oder Anspruch 2, **dadurch gekennzeichnet, dass** die Kettfadenstruktur (17) Polyamid-Fäden aufweist.

15. Zahnriemen nach Anspruch 1 oder Anspruch 2, **dadurch gekennzeichnet, dass** die Kettfadenstruktur (17) meta-aromatische Polyamid-Fäden aufweist.

16. Zahnriemen nach einem der vorhergehenden Ansprüche, **dadurch gekennzeichnet, dass** der Zahnriemen ein Beschichtungsgewebe (7) aufweist, das an den Zähnen (5) anhaftet.

17. Zahnriemen nach einem der vorhergehenden Ansprüche, **dadurch gekennzeichnet, dass** das erste Gewebe und das zweite Gewebe aus den gleichen Materialien gebildet sind.

18. Verfahren zum Herstellen eines Zahnriemens (1), wobei der Zahnriemen aufweist: einen Körper (2) aus Elastomermaterial, wobei der Körper mit einer Fläche versehen ist, von der eine mehrere Zähne (5) aufweisende Verzahnung (4) einstückig absteht; und eine der genannten Fläche entgegengesetzte Rückseite (8), die mit einem Gewebe (10) versehen ist, das eine Vielzahl von Fasern (11) aufweist und an der Oberfläche (13) der Rückseite anhaftet, wobei das Verfahren durch einen Schritt **gekennzeichnet** ist, in dem die genannte Oberfläche derart behandelt wird, dass die Oberfläche mindestens teilweise büschelig gemacht wird.

19. Verfahren nach Anspruch 18, **dadurch gekennzeichnet, dass** die Behandlung eine Abrasionsbehandlung ist.

20. Verfahren nach Anspruch 19, **dadurch gekennzeichnet, dass** die Behandlung eine Schleifbehandlung ist.

## Revendications

1. Une courroie dentée (1) comprenant : un corps (2) réalisé en matériau élastomère, ledit corps étant fourni avec une face, à partir de laquelle une denture (4) s'étend intégralement qui est composée d'une pluralité de dents (5) ; et un dos (8) opposé à ladite face, ledit dos (8) étant fourni avec un textile (10) qui comprend une multitude de fibres (11) et qui adhère à la surface (13) dudit dos, ladite courroie dentée (1) étant **caractérisée en ce que** ledit dos (8) possède une surface à fibres coupées ou touffetée.

2. La courroie dentée selon la revendication 1, **caractérisée en ce que** ladite surface à fibres coupées ou touffetée est une surface exposée dudit textile, possédant des touffes définies par lesdites fibres dudit textile.

3. La courroie dentée selon la revendication 2, **caractérisée en ce que** lesdites fibres dépassent partiellement de ladite surface dudit dos.

4. La courroie dentée selon la revendication 3, **caractérisée en ce que** lesdites fibres sont partiellement interrompues sur au moins une partie de ladite surface.

5. La courroie dentée selon la revendication 4, **caractérisée en ce que** lesdites fibres dudit textile sont partiellement abrasées.

6. La courroie dentée selon la revendication 5, **caractérisée en ce que** lesdites fibres dudit textile sont meulées.

7. La courroie dentée selon l'une quelconque des revendications précédentes, **caractérisée en ce que** ledit textile (10) est réalisé avec une trame (16) et une chaîne (17), ladite trame (16) étant composée d'un fil de trame formé par un fil élastique (18) en tant que noyau et par au moins une paire de fils composites (19) enroulés sur ledit fil élastique (18), chaque fil composite (19) comprenant un fil possédant une résistance thermique et mécanique élevée, et au moins un fil de revêtement (21) enroulé sur ledit fil (20) doté d'une résistance thermique et mécanique élevée.

8. La courroie dentée selon la revendication 7, **caractérisée en ce que** chacun des fils composites (19) comprend un fil (20) possédant une résistance thermique et mécanique élevée et une paire de fils de revêtement (21) enroulés sur ledit fil (20) doté d'une résistance thermique et mécanique élevée.

9. La courroie dentée selon la revendication 5 ou la revendication 6, **caractérisée en ce que** ledit premier fil élastique (18) est réalisé en polyuréthane.

10. La courroie dentée selon l'une quelconque des revendications 5 à 7, **caractérisée en ce que** ledit fil (20) doté d'une résistance thermique et mécanique élevée est réalisé en polyamide para-aromatique.

11. La courroie dentée selon l'une quelconque des revendications 5 à 8, **caractérisée en ce que** chacun desdits fils de revêtement (21) est réalisé en matériau polymère texturé.

12. La courroie dentée selon l'une quelconque des revendications 5 à 9, **caractérisée en ce que** chacun desdits fils de revêtement (21) est réalisé en polyamide.

13. La courroie dentée selon la revendication 10, **caractérisée en ce que** ledit fil de revêtement (21) est réalisé en nylon 66.

14. La courroie dentée selon la revendication 1 ou la revendication 2, **caractérisée en ce que** ladite chaîne (17) est composée de fils en polyamide.

15. La courroie dentée selon la revendication 1 ou la revendication 2, **caractérisée en ce que** ladite chaîne (17) est composé de fils en polyamide méta-aromatique.

16. La courroie dentée selon l'une quelconque des revendications précédentes, **caractérisée en ce qu'**elle comprend un textile de revêtement (7) qui adhère aux dents (5).

17. La courroie dentée selon l'une quelconque des revendications précédentes, **caractérisée en ce que** ledit premier textile et ledit deuxième textile sont réalisés dans le même matériau.

18. Un procédé pour fabriquer une courroie dentée (1), ladite courroie dentée comprenant : un corps (2) réalisé en matériau élastomère, ledit corps étant fourni avec une face, à partir de laquelle une denture (4) s'étend intégralement qui est composée d'une pluralité de dents (5) ; et un dos (8) opposé à ladite face avant, ledit dos (8) étant fourni avec un textile (10) qui comprend une multitude de fibres (11) et qui adhère à la surface (13) dudit dos, ledit procédé étant **caractérisé en ce qu'**il comprend l'étape consistant à traiter ladite surface afin de rendre ladite surface au moins partiellement touffetée ou à fibres coupées.

19. Le procédé selon la revendication 18, **caractérisé en ce que** ledit traitement est un traitement d'abrasion.

20. Le procédé selon la revendication 19, **caractérisé en ce que** ledit traitement est un traitement de meulage.
